# EUROPEAN PATENT APPLICATION

(11) **EP 4 451 392 A1**
(43) Date of publication of application: **23.10.2024**
(21) Application number: 24166087.7
(22) Date of filing: 25.03.2024
(51) Int. Cl.: H01M 4/66

(54) **DRY ELECTRODE AND LITHIUM BATTERY INCLUDING THE SAME**

(30) Priority: 26.03.2023 KR 20230039374; 11.10.2023 KR 20230135163
(71) Applicant: Samsung SDI Co., Ltd., Yongin-si, Gyeonggi-do 17084 (KR)
(72) Inventor: PYUN, Ahram, 17084 Yongin-si (KR); LEE, Jinhyon, 17084 Yongin-si (KR); NAM, Hyun, 17084 Yongin-si (KR); KWON, Seunguk, 17084 Yongin-si (KR); KWON, Ilkyong, 17084 Yongin-si (KR); YOON, Yeonhee, 17084 Yongin-si (KR); LEE, Donggeun, 17084 Yongin-si (KR); BANG, Youmin, 17084 Yongin-si (KR); KIM, Seongdae, 17084 Yongin-si (KR); CHOI, Jongsup, 17084 Yongin-si (KR)
(74) Representative: Marks & Clerk LLP

(57) **Abstract**

A dry electrode and a lithium battery including the same are provided. The dry electrode includes a first dry electrode film, a second dry electrode film opposite to the first dry electrode film, and a metal substrate between the first dry electrode film and the second dry electrode film, wherein the metal substrate includes a mesh area including a plurality of through-areas.

## Description

### BACKGROUND

### 1. Field

One or more embodiments of the present disclosure relate to a dry electrode and a lithium battery including the same.

### 2. Description of the Related Art

In order to achieve miniaturization and high performance of various devices, in addition to miniaturization and weight reduction of lithium batteries, high energy density is becoming important and/or desired. In this regard, high-capacity lithium batteries are becoming important and/or desired.

In electrodes prepared from a slurry including a solvent, an excessive amount of solvent may be utilized in preparing the electrodes, and thus dry methods that eliminate the utilization of such organic solvents are under review.

### SUMMARY

Aspects of one or more embodiments of the present disclosure relate to a dry electrode including a metal substrate that includes a mesh area.

Aspects of one or more embodiments of the present disclosure relate to a lithium battery including the dry electrode.

Additional aspects will be set forth in part in the description which follows and, in part, will be apparent from the description, or may be learned by practice of the presented embodiments of the present disclosure.

According to one or more embodiments of the present disclosure, a dry electrode includes a first dry electrode film, a second dry electrode film opposite to the first dry electrode film, and a metal substrate between (e.g. disposed between) the first dry electrode film and the second dry electrode film, wherein the metal substrate includes a mesh area including a plurality of through-areas.

According to one or more embodiments of the present disclosure, a lithium battery includes a first electrode, a second electrode, and an electrolyte between (e.g. disposed between) the first electrode and the second electrode, wherein the first electrode, the second electrode, or a combination thereof includes the dry electrode.

At least some of the above and other features of the invention are set out in the claims.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIG. 1 is a schematic perspective view illustrating a stacked state of a dry electrode according to one or more embodiments of the present disclosure;
FIG. 2 is a schematic plan view illustrating a metal substrate according to one or more embodiments of the present disclosure;
FIG. 3 is a schematic cross-sectional view of a dry electrode according to one or more embodiments of the present disclosure;
FIG. 4 is a schematic perspective view of a lithium battery according to one or more embodiments of the present disclosure;
FIG. 5 is a schematic perspective view of a lithium battery according to one or more embodiments of the present disclosure; and
FIG. 6 is a schematic perspective view of a lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. The embodiments are merely described below, by referring to the drawings, to explain aspects of the present description. These embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

Various implementations are illustrated in the accompanying drawings. The present disclosure may, however, be embodied in different forms and should not be construed as limited to the embodiments set forth herein. Rather, these embodiments are provided so that the present disclosure will be thorough and complete, and will fully convey the scope of the present disclosure to those skilled in the art.

It will be understood that, although the terms "first," "second," and "third," etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section described below could be termed a second element, component, region, layer, or section, without departing from the scope of the present disclosure.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. "At least one" should not be construed as being limited to the singular. It will be further understood that the terms "includes," "including," "comprises," and/or "comprising," when used in the detailed description, specify the presence of the stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," and "upper" and the like, may be used herein for ease of explanation to describe one element or feature's relationship to another element(s) or feature(s) referring to the drawings. It will be understood that the spatially relative terms are intended to encompass different orientations of a device in use or operation, in addition to the orientation illustrated in the drawings. For example, when a device in the drawings is turned over, elements described as "below" or "beneath" other elements or features would then be "above" or "over" the other elements or features. The example term "below" may encompass both orientations of above and below. The device may be otherwise oriented (e.g., rotated 90 degrees or at other orientations), and the spatially relative terms used herein may be interpreted accordingly.

Unless otherwise defined, all terms (including technical and scientific terms) used herein have the same meaning as commonly understood by one of ordinary skill in the art to which the present disclosure belongs. In addition, it will be further understood that terms, such as those defined in commonly used dictionaries, should be interpreted as having a meaning that is consistent with their meaning in the context of the relevant art and/or the present disclosure, and should not be interpreted in an idealized or overly formal sense, unless expressly so defined herein.

Embodiments are described herein with reference to cross-sectional views which are schematic diagrams of idealized embodiments. As such, variations from the shapes of the illustrations as a result of, for example, manufacturing techniques and/or tolerances, are to be expected. Thus, the embodiments described herein should not be construed as limited to the particular shapes or regions as illustrated herein, but may include deviations in shapes that result, for example, from manufacturing. For example, regions illustrated or described as being flat may be typically rough and/or have nonlinear features. Moreover, sharp-drawn angles may be round. In one or more embodiments, regions illustrated in the drawings are schematic in nature and their shapes are not intended to illustrate the actual shape of a region and are not intended to limit the scope of the claims.

In the drawings, the thicknesses and/or relative sizes of elements, layers, and regions may be exaggerated or reduced for clarity.

Throughout the specification, it will be understood that when a component, such as a layer, a film, a region, or a plate, is referred to as being "on," "connected to," or "couple to" another component, the component may be directly on the other component or one or more intervening components may be present. In addition, it will also be understood that when a component is referred to as being "between" two components, it can be the only component between the two components, or one or more intervening components may also be present.

As used herein, the term "dry electrode" or "dry electrode film" refers to an electrode or electrode film which does not include a solvent or in which a solvent is not intentionally used in an electrode preparing process. Solvents include process solvents, process solvent residues, process solvent impurities, and/or the like.

As used herein, the term "particle diameter" refers to an average diameter when particles are spherical and refers to an average major axis length when particles are non-spherical. A particle diameter may be measured by utilizing a particle size analyzer (PSA). A "particle diameter" is, for example, an average particle diameter. An "average particle diameter" refers to, for example, a median particle diameter (D50). D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

The "aspect ratio" used herein may refer to the average aspect ratio and may be determined from SEM images.

The term "electrode active material" as used herein refers to an electrode material that may undergo lithiation and delithiation.

The term "cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to an electrode active material.

The terms "delithiate" and "delithiating" as used herein refer to a process of removing lithium from an electrode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

As utilized herein, the terms "fibrillized" and "fibrillize" refer to a process of converting *(e.g.,* by grinding or pulverizing) particulates of a substance into fibrous shape (*i.e.*, fibrils) of said substance that has higher aspect ratio than the particulates.

While specific embodiments have been described, alternatives, modifications, variations, improvements, and substantial equivalents that are or may be presently unforeseen may arise to applicants or others skilled in the art. The appended claims as filed and as they may be amended are intended to embrace all such alternatives, modifications, variations, improvements, and substantial equivalents.

Hereinafter, a dry electrode and a lithium battery including the same according to one or more example embodiments will be described in more detail.

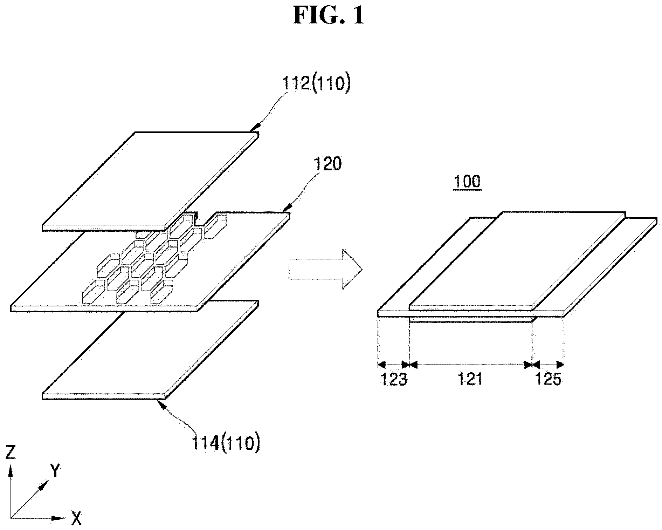

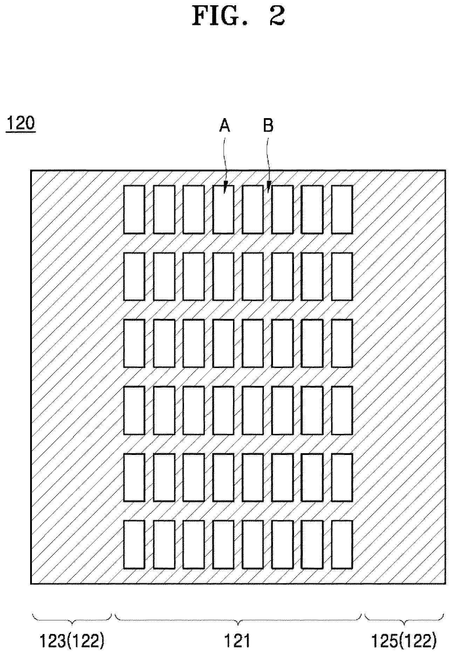

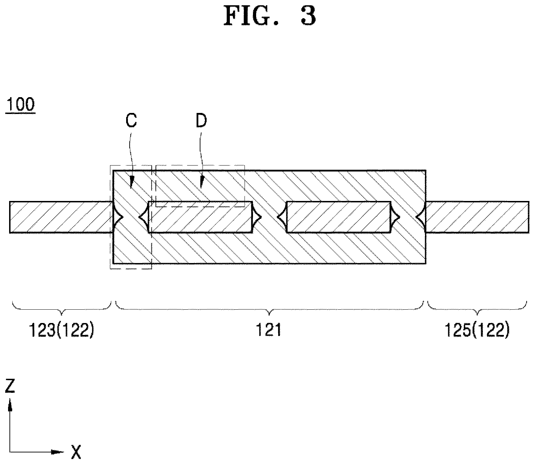

FIG. 1 is a schematic perspective view illustrating a stacked state of a dry electrode 100 according to one or more embodiments of the present disclosure. FIG. 2 is a schematic plan view illustrating a metal substrate 120 according to one or more embodiments of the present disclosure. FIG. 3 is a schematic cross-sectional view of the dry electrode 100 according to one or more embodiments of the present disclosure. Hereinafter, the dry electrode 100 according to one or more embodiments of the present disclosure will be described with reference to FIGs. 1 to 3.

In the drawings, an X direction refers to a longitudinal direction, a Y direction refers to a width direction, and a Z direction refers to a thickness direction.

Referring to FIGs. 1 to 3, the dry electrode 100 according to one or more embodiments may include a first dry electrode film 112, a second dry electrode film 114 opposite to the first dry electrode film 112, and a metal substrate 120 disposed between the first dry electrode film 112 and the second dry electrode film 114, wherein the metal substrate 120 includes a mesh area 121 including a plurality of through-areas A (e.g. in a plan view). For example, the mesh area 121 may include the plurality of through-areas A.

If (*e.g.,* when) the metal substrate 120 includes the mesh area 121 including the plurality of through-areas A, the first dry electrode film 112 and the second dry electrode film 114 may be electrically connected in the thickness direction (Z direction) within the through-areas A. In one or more embodiments, the first dry electrode film 112 and the second dry electrode film 114 may be electrically connected, and thus electron flow in a dry electrode film 110 may be improved, and internal resistance may be reduced, thereby improving the charge/discharge efficiency and lifespan characteristics of a lithium battery including the dry electrode 100. In one or more embodiments, an electrolyte may be more easily impregnated into the dry electrode 100 through the through-areas A, thereby improving the lifespan and battery efficiency of a lithium battery including the dry electrode 100.

### Dry electrode film

The dry electrode 100 may include the dry electrode film 110 so that the internal resistance of the dry electrode 100 may be reduced and the mechanical properties thereof may be improved. For example, the dry electrode film 110 may include the first dry electrode film 112 and the second dry electrode film 114.

Referring to FIG. 2 and FIG. 3, the first dry electrode film 112 and the second dry electrode film 114 may each be partially inserted into the through-areas A of the metal substrate 120 to be in contact with each other in the thickness direction Z so that the first dry electrode film 112 and the second dry electrode film 114 may be electrically connected in the through-areas A in the thickness direction (direction Z).

For example, the first dry electrode film 112 and the second dry electrode film 114 may be attached in the thickness direction within one or more through-areas A. For example, the first dry electrode film 112 and the second dry electrode film 114 may be attached in the thickness direction within (substantially) all the through-areas A included in the mesh area 121.

For example, if (*e.g.,* when) the first dry electrode film 112 and the second dry electrode film 114 are attached in the thickness direction within one or more through-areas A, an electrolyte may pass through the metal substrate 120 to easily move between the first dry electrode film 112 and the second dry electrode film 114. In one or more embodiments, the electrolyte may be more easily impregnated into the entirety of the dry electrode film 110.

According to one or more embodiments, the first dry electrode film 112 and the second dry electrode film 114 may be in direct contact with each other in the thickness direction (Z direction) within one or more through-areas A. For example, if (*e.g.,* when) the first dry electrode film 112 and the second dry electrode film 114 are in direct contact with each other, an interface between the first dry electrode film 112 and the second dry electrode film 114 may be free of an adhesive layer.

According to one or more embodiments, the dry electrode film 110 may include a through-portion C formed by attaching the first dry electrode film 112 and the second dry electrode film 114 in the thickness direction (Z direction).

For example, the through-portion C may be an area in which the first dry electrode film 112 and the second dry electrode film 114 are attached to each other, and the dry electrode film 110 may include the through-portion C. For example, the dry electrode 100 may include the through-portion C.

According to one or more embodiments, a thickness of the through-portion C may be less than or equal to the sum of a thickness of the first dry electrode film 112, a thickness of the second dry electrode film 114, and a thickness of the metal substrate 120.

According to one or more embodiments, a mixture density of the through-portion C may be in a range of 2.8 g/cc to about 3.5 g/cc. For example, the mixture density of the through-portion C may be in a range of about 2.9 g/cc to about 3.5 g/cc, about 3.0 g/cc to about 3.5 g/cc, about 3.1 g/cc to about 3.5 g/cc, about 3.0 g/cc to about 3.4 g/cc, or about 3.0 g/cc to about 3.3 g/cc. The mixture density is calculated by dividing the weight of the components (other than the current collector, i.e., active material, conductive material, binder, etc.) included in the through-portion C by the volume of the through-portion C.

According to one or more embodiments, the mesh area 121 may further include a lattice structure B formed by the through-areas A. For example, the lattice structure B may refer to a closed area excluding the through-areas A in the mesh area 121.

For example, in the dry electrode film 110 including the first dry electrode film 112 and the second dry electrode film 114, at least some of areas D excluding the through-portion C may be disposed on the lattice structure B.

According to one or more embodiments, among areas of the first dry electrode film 112 and the second dry electrode film 114, a mixture density of each of the areas D disposed on the lattice structure B may be in a range of about 3.2 g/cc to about 3.9 g/cc. For example, among the areas of the first dry electrode film 112 and the second dry electrode film 114, the mixture density of each of the areas D disposed on the lattice structure B may be in a range of about 3.3 g/cc to about 3.9 g/cc, about 3.4 g/cc to about 3.9 g/cc, about 3.5 g/cc to about 3.9 g/cc, about 3.2 g/cc to about 3.8 g/cc, about 3.2 g/cc to about 3.7 g/cc, or about 3.5 g/cc to about 3.7 g/cc. The mixture density is calculated by dividing the weight of the components (other than the current collector, i.e., active material, conductive material, binder, etc.) included in the through-portion B by the volume of the through-portion B.

According to one or more embodiments, the first dry electrode film 112 and the second dry electrode film 114 may be attached in the thickness direction (Z direction) within (substantially) all the through-areas A included in the mesh area 121. In one or more embodiments, the dry electrode film 110 may include a plurality of through-portions C passing through (substantially) all the through-areas A included in the mesh area 121.

According to one or more embodiments, through heat fusion, the first dry electrode film 112 and the second dry electrode film 114 may be attached to each other in the thickness direction (Z direction) within at least some of the plurality of through-areas A.

According to one or more embodiments, an area between the first dry electrode film 112 and the metal substrate 120 or an area between the second dry electrode film 114 and the metal substrate 120 may be free of an adhesive layer. The first dry electrode film 112 and the second dry electrode film 114 may be attached in the thickness direction (Z direction) in the through-areas A, and thus the metal substrate 120 and the first dry electrode film 112 may be attached, and the metal substrate 120 and the second dry electrode film 114 may be attached.

According to one or more embodiments, the dry electrode film 110 may include a dry electrode active material and a dry binder. The dry electrode active material may be, for example, an electrode active material that is not impregnated, dissolved, or dispersed in a process solvent in a process of preparing a dry electrode film. For example, the dry electrode active material may be an electrode active material that does not include a process solvent or does not come into contact with (*e.g.,* does not intentionally come into contact with) a process solvent in a process of preparing a dry electrode film.

The dry electrode active material may include a lithium transition metal oxide.

For example, the lithium transition metal oxide may include at least one or more of (*e.g.,* at least one or more selected from among) compounds represented by Formulas 1 to 8:

**Formula 1** **LiₐNiₓCo_{y}M_{z}O_{2-b}A_{b}**

In Formula 1, 1.0≤a≤1.2, 0≤b≤0.2, 0.8≤x<1, 0≤y≤0.3, 0<z≤0.3, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any suitable combination thereof, and A may be F, S, Cl, Br, or any suitable combination thereof.

**Formula 2** **LiNiₓCo_{y}Mn_{z}O₂**

**Formula 3** **LiNiₓCo_{y}Al_{z}O₂**

In Formula 2 and Formula 3, 0.8≤x≤0.95, 0≤y≤0.2, 0<z≤0.2, and x+y+z=1.

**Formula 4** **LiNiₓCo_{y}Mn_{z}Al_{w}O₂**

In Formula 4, 0.8≤x≤0.95, 0≤y≤0.2, 0<z≤0.2, 0<w≤0.2, and x+y+z+w=1.

**Formula 5** **LiₐCoₓM_{y}O_{2-b}A_{b}**

In Formula 5, 1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any suitable combination thereof, and A may be F, S, Cl, Br, or any suitable combination thereof.

**Formula 6** **LiₐNiₓMn_{y}M'_{z}O_{2-b}A_{b}**

in Formula 6, 1.0≤a≤1.2, 0≤b≤0.2, 0<x≤0.3, 0.5≤y<1, 0<z≤0.3, x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any suitable combination thereof, and A may be F, S, Cl, Br, or any suitable combination thereof.

**Formula 7** **LiₐM1 ₓM2_{y}PO_{4-b}X_{b}**

In Formula 7, 0.90≤a≤1.1, 0≤x≤0.9, 0≤y≤0.5, 0.9<x+y<1.1, 0≤b≤2, M1 may be chromium (Cr), manganese (Mn), iron (Fe), cobalt (Co), nickel (Ni), copper (Cu), zirconium (Zr), or any suitable combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or any suitable combination thereof, and X may be O, F, S, P, or any suitable combination thereof.

**Formula 8** **LiₐM3_{z}PO₄**

In Formula 8, 0.90≤a≤1.1, 0.9≤z≤1.1, and M3 may be chromium (Cr), manganese (Mn), iron (Fe), cobalt (Co), nickel (Ni), copper (Cu), zirconium (Zr), or any suitable combination thereof.

According to one or more embodiments, the dry electrode active material may include a core-shell structure.

For example, the core may include a lithium transition metal oxide, the shell may include a first metal oxide and a first carbon-based material, and the first carbon-based material and a transition metal of the lithium transition metal oxide may be chemically bound, for example, through a chemical bond.

A carbon atom (C) of the first carbon-based material may be chemically bound to a transition metal (Me) of the lithium transition metal oxide through a C-O-Me bond (for example, a C-O-Ni bond or a C-O-Co bond), for example, by utilizing an oxygen atom. The first carbon-based material disposed in the shell and the lithium transition metal oxide disposed in the core may be chemically bound through a chemical bond so that the core and the shell may become a composite. In one or more embodiments, the dry electrode active material may be distinguished from a simple physical mixture or blend of the first carbon-based material and the lithium transition metal oxide. The first metal oxide and the first carbon-based material may also be chemically bound through a chemical bond. In one or more embodiments, the chemical bond may be, for example, a covalent bond or an ionic bond.

For example, the dry binder included in the dry electrode film 110 may be a binder that is not impregnated, dissolved, or dispersed in a process solvent during a process of preparing the dry electrode film 110. The dry binder may be, for example, a binder that does not include a process solvent or does not come into contact with (e.g., does not intentionally come into contact with) a process solvent in a process of preparing the dry electrode film 110.

According to one or more embodiments, the dry binder may be, for example, a fibrillized binder or a fibrous binder. The fibrillized binder or fibrous binder may serve as a matrix for supporting and binding the dry electrode active material and other components included in the dry electrode film 110. For example, it may be confirmed that the fibrillized binder or fibrous binder has a fibrous form from a scanning electron microscope image of an electrode cross section.

For example, the fibrillized binder or fibrous binder may have an aspect ratio (e.g., a ratio of length to width in an image) of 10 or more, 20 or more, 50 or more, or 100 or more.

According to one or more embodiments, the dry binder may include, for example, polytetrafluoroethylene (PTFE), a polyvinylidene fluoride-hexapropylene (PVDF-HFP) copolymer, polyvinylidene fluoride (PVDF), polyvinyl alcohol (PVA), polyacrylonitrile, carboxymethylcellulose (CMC), starch, hydroxypropylcellulose, cellulose, polyvinylpyrrolidone (PVP), polyethylene (PE), polypropylene (PP), ethylenepropylene-diene monomer (EPDM) rubber, sulfonated-EPDM rubber, styrene butadiene rubber (SBR), a fluoro rubber, or any suitable copolymer thereof, but the present disclosure is not necessarily limited thereto. Any binder may be utilized as long as the binder may be utilized in preparing a dry electrode. For example, the dry binder may include a fluorine-based binder. For example, the fluorine-based binder may include PTFE, a PVDF-HFP copolymer, or PVDF.

According to one or more embodiments, a glass transition temperature T_{g} of the dry binder may be, for example, in a range of about -30 °C to about 150 °C, about 15 °C to about 150 °C, about 15 °C to about 130 °C, about 50 °C to about 130 °C, about 100 °C to about 130 °C, or about 120 °C to about 130 °C. For example, the glass transition temperature T_{g} of the dry binder may be in a range of about -30 °C to about 150 °C, about -30 °C to about 100 °C, about -30 °C to about 50 °C, about -30 °C to about 15 °C, about -30 °C to about -10 °C, or about 30 °C to about -20 ° C. For example, a glass transition temperature of PTFE may be, for example, in a range of about 120 °C to about 130 °C. For example, the dry binder may have a glass transition temperature in such ranges, and thus the fibrillized binder or the fibrous binder may be more easily obtained in a process of preparing a dry electrode. The glass transition temperature T_{g} of the dry binder may mean the glass transition temperature measured with respect to the dry binder using a DSC Discovery (TA Instrument Inc.). The dry binder is heated to 180 °C at a rate of 20 °C/min, slowly cooled to -100 °C at the same rate, and heated to 100 °C at a rate of 10 °C/min in order to obtain an endothermic transition curve. Then, an inflection point of the endothermic transition curve may be determined as the glass transition temperature.

According to one or more embodiments, a content (e.g., amount) of the dry binder may be, for example, in a range of about 0.1 wt% to about 5 wt%, about 0.5 wt% to about 5 wt%, or about 1 wt% to about 5 wt% with respect to the total weight of the dry electrode film 110. The dry electrode film 110 may include the dry binder in such a range so that a binding force of the dry electrode film 110 may be improved and the dry electrode film 110 may maintain high energy density.

The dry electrode film 110 may further include, for example, a conductive material. The conductive material may be, for example, a dry conductive material. The dry conductive material may be, for example, a conductive material that is not impregnated, dissolved, or dispersed in a process solvent in a process of preparing a dry electrode film. The dry conductive material may be, for example, a conductive material that does not include a process solvent or does not come into contact with (*e.g.,* does not intentionally come into contact with) a process solvent in a process of preparing a dry electrode film. The dry conductive material may include, for example, a carbon-based conductive material. The carbon-based conductive material may include, for example, a fibrous carbon-based material having an aspect ratio of 10 or more, a particulate carbon-based material having an aspect ratio of less than 10, or any suitable combination thereof.

The fibrous carbon-based material having an aspect ratio of 10 or more may include, for example, a carbon fiber, carbon nanotubes (CNTs), carbon nanobelts, and/or the like, but the present disclosure is not limited thereto. Any material may be utilized as long as the material may be utilized as a carbon-based conductive material in the art. The fibrous carbon-based material having an aspect ratio of 10 or more may be (*e.g.,* may be selected from among) second carbon-based materials. The fibrous carbon-based conductive material may be distinguished from a second carbon-based material constituting a portion of a dry electrode active material in that the fibrous carbon-based conductive material is simply mixed with a dry electrode active material.

The particulate carbon-based material having an aspect ratio of less than 10 may include, for example, carbon black, acetylene black, Ketjen black, natural graphite, artificial graphite, and/or the like, but the present disclosure is not limited thereto. Any material may be utilized as long as the material may be utilized as a carbon-based conductive material in the art. The aspect ratio of the particulate carbon-based material may be, for example, in a range of about 1 to about 7, about 1 to about 5, about 1 to about 3, or about 1 to about 2.

According to one or more embodiments, a content (*e.g.,* amount) of the dry conductive material included in the dry electrode film 110 may be, for example, in a range of about 0.1 wt% to about 5 wt%, about 0.5 wt% to about 5 wt%, or about 1 wt% to about 5 wt% with respect to the total weight of the dry electrode film 110. The dry electrode film 110 may include the dry conductive material in such ranges so that the conductivity of the dry electrode film 110 may be improved and the cycle characteristics of a lithium battery including the dry electrode film 110 may be improved.

According to one or more embodiments, the dry electrode film 110 may be, for example, a self-standing film. The dry electrode film 110 may maintain the form of a film, for example, without a support. In one or more embodiments, the dry electrode film 110 may be prepared as a separate self-standing film and then disposed on the metal substrate 120. The dry electrode film 110 may be prepared in a dry type or kind and thus may not include (*e.g.,* may exclude) an intentionally added process solvent. For example, the dry electrode film 110 may not include (*e.g.,* may exclude) a residual process solvent. An unintentional trace amount of solvent may remain in the dry electrode film 110, but the solvent may not be an intentionally added process solvent. In one or more embodiments, the dry electrode film 110 may be distinguished from a wet electrode film prepared by mixing constituent components and a process solvent and then drying the resultant mixture to remove a portion or the entirety of the process solvent.

According to one or more embodiments, a tensile strength of the dry electrode film 110 before stacking may be, for example, 100 kPa or more, 200 kPa or more, or 400 kPa or more at a temperature of 25 °C. The tensile strength of the dry electrode film 110 may be, for example, in a range of about 100 kPa to about 5,000 kPa, about 200 kPa to about 5,000 kPa, or about 400 kPa to about 5,000 kPa at a temperature 25 °C. A tensile strength in a particular direction may be measured by stretching a sample at a speed of 5 mm/min in the particular direction until fracture utilizing a texture analyzer (e.g. TA.XT plus manufactured by Stable Micro Systems), and measuring the largest stress applied at fracture in a stress-strain curve.

The dry electrode film 110 may satisfy such a tensile strength range, and thus the structural stability of the dry electrode film 110 may be improved. In one or more embodiments, the dry electrode film 110 may maintain a stable three-dimensional conductive network during a charging or discharging process so that the reversibility of an electrode reaction may be improved. The dry electrode film 110 may have a high tensile strength in such ranges, and thus the mechanical strength of the dry electrode film 110 may be improved. The dry electrode film 110 may have improved mechanical strength, which may suppress or reduce local deterioration due to a change in volume of the dry electrode 100 including the dry electrode film 110 and a lithium battery including the same during charging/discharging. In one or more embodiments, the cycle characteristics of a lithium battery may be improved.

### Metal substrate

The dry electrode 100 may include the metal substrate 120 including the mesh area 121 including the plurality of through-areas A. For example, the metal substrate 120 may function as a current collector. The first dry electrode film 112 and the second dry electrode film 114 may be attached to each other and electrically connected in the through-areas A included in the metal substrate 120. The first dry electrode film 112 and the second dry electrode film 114 may be electrically connected so that electron movement in the dry electrode film 110 may be improved and the internal resistance of the dry electrode 100 may be reduced. In one or more embodiments, the efficiency and lifespan of a lithium battery including the dry electrode 100 may be improved.

As a material constituting the metal substrate 120, any material, which does not react (or should not substantially react) with lithium, for example, any material, which does not form an alloy or compound together with lithium and has conductivity (e.g., is a conductor), may be utilized. The metal substrate 120 may include, for example, a metal or alloy. The metal substrate 120 may include (e.g., consist of), for example, indium (In), copper (Cu), magnesium (Mg), stainless steel (SUS), titanium (Ti), iron (Fe), cobalt (Co), nickel (Ni), zinc (Zn), aluminium (Al), germanium (Ge), lithium (Li), or an suitable alloy thereof.

According to one or more embodiments, other layers may not be disposed between the metal substrate 120 and the dry electrode film 110. The dry electrode film 110 may be disposed directly on the metal substrate 120, thereby preventing or reducing a decrease in battery density and durability due to other layers being disposed between the metal substrate 120 and the dry electrode film 110.

According to one or more embodiments, a ratio of the total area of the plurality of through-areas A to the total area of the metal substrate 120 may be 40 % or more. For example, the ratio of the total area of the plurality of through-areas A to the total area of the metal substrate 120 may be 50 % or more. For example, the ratio of the total area of the plurality of through-areas A to the total area of the metal substrate 120 may be in a range of about 40 % to about 90 % (e.g. about 40 % to about 80%, about 40 % to about 70 %, about 40 % to about 60 %, or about 40 % to about 50 %) or about 50 % to about 90 % (e.g. about 50 % to about 80%, about 50 % to about 70 %, about 50 % to about 60 %).

For example, if (*e.g.,* when) the ratio of the total area of the plurality of through-areas satisfies such ranges, a range in which the first dry electrode film 112 and the second dry electrode film 114 are electrically connected is sufficient, thereby further improving the battery efficiency of a lithium battery including the dry electrode 100. In one or more embodiments, an attaching force between the first dry electrode film 112 and the second dry electrode film 114 may be increased, thereby further improving the lifespan characteristics of a lithium battery including the dry electrode 100.

According to one or more embodiments, a ratio of an area of any one through-area A of the plurality of through-areas A to the total area of the metal substrate 120 may be in a range of about 0.1 % to about 50 % (e.g. about 0.1 % to about 40%, about 1 % to about 50 %, about 5 % to about 50 %, or about 10 % to about 50 %).

For example, if (*e.g.,* when) the ratio of the area of any one through-area A to the total area of the metal substrate 120 satisfies such a range, the first dry electrode film 112 and the second dry electrode film 114 may be more easily electrically connected in the through-areas A.

Referring to FIG. 3, the metal substrate 120 may further include a tab area 122 extending from the mesh area 121 in the longitudinal direction (X direction).

According to one or more embodiments, the tab area 122 may be a through-area-free area.

According to one or more embodiments, the tab area 122 may include a first tab area 123 and a second tab area 125, and the mesh area 121 may be disposed between the first tab area 123 and the second tab area 125 in the longitudinal direction (X direction).

According to one or more embodiments, the mesh area 121 may be disposed between the first dry electrode film 112 and the second dry electrode film 114, and at least a portion of the tab area 122 may be exposed to the outside of the first dry electrode film 112 and the second dry electrode film 114 (e.g. a dry electrode film 110 may not be disposed on the tab area 122; for example, the first dry electrode film 112 and/or the second dry electrode film 114 may not be disposed on the tab area).

### Dry electrode

The dry electrode 100 may be, for example, a dry cathode. The dry cathode may include a dry cathode film as the dry electrode film 110, and the dry cathode film may include a dry cathode active material.

For example, the dry cathode active material may include a dry cathode active material having a core/shell structure. For example, the core may include a lithium transition metal oxide, and the shell may include a first metal oxide and a first carbon-based material.

For example, in addition to the dry cathode active material having the core/shell structure, the dry cathode active material may additionally include a general dry cathode active material, for example, a general dry cathode active material according to a related art. As the dry cathode active material according to the related art, any material may be utilized without limitation as long as the material is generally available/ generally utilized in the art.

According to one or more embodiments, the dry cathode active material may include at least one composite oxide of lithium and a metal of (*e.g,* selected from among) cobalt, manganese, nickel, and/or any suitable combination thereof. A specific example of the dry cathode active material may include a compound represented by (*e.g.,* at least one or more of) any one of formulas of LiₐA_{1-b}B'D₂, wherein 0.90≤a≤1 and 0≤b≤0.5; LiₐE_{1-b}B'_{b}O_{2-c}D_{c} wherein 0.90≤a≤1, 0≤b≤0.5, and 0≤c≤0.05, LiE_{2-b}B'_{b}O_{4-c}D_{c}, wherein 0≤b≤0.5 and 0≤c≤0.05; LiₐNi_{1-b-c}Co_{b}B'_{c}D_{α}, wherein 0.90≤a≤1, 0≤b≤0.5, 0≤c≤0.05, and 0<α≤2; LiₐNi_{1-b-c}Co_{b}B'_{c}O_{2-α}F'_{α}, wherein 0.90≤a≤1, 0≤b≤0.5, 0≤c≤0.05, and 0<α<2; LiₐNi_{1-b-c}Co_{b}B'_{c}O_{2-α}F'₂, wherein 0.90≤a≤1, 0≤b≤0.5, 0≤c≤0.05, and 0<α<2; LiₐNi_{1-b-c}Mn_{b}B'_{c}D_{α}, wherein 0.90≤a≤1, 0≤b≤0.5, 0≤c≤0.05, and 0<α≤2; LiₐNi_{1-b-c}Mn_{b}B'_{c}O_{2-α}F'_{α}, wherein 0.90≤a≤1, 0≤b≤0.5, 0≤c≤0.05, and 0<α<2; LiₐNi_{1-b-c}Mn_{b}B'_{c}O_{2-α}F'₂, wherein 0.90≤a≤1, 0≤b≤0.5, 0≤c≤0.05, and 0<α<2; LiₐNi_{b}E_{c}G_{d}O₂, wherein 0.90≤a≤1, 0≤b≤0.9, and 0≤c≤0.5, and 0.001≤d≤0.1; LiₐNi_{b}Co_{c}Mn_{d}GₑO₂, wherein 0.90≤a≤1, 0≤b≤0.9, 0≤c≤0.5, 0≤d≤0.5, and 0.001≤e≤ 0.1; LiₐNiG_{b}O₂, wherein 0.90≤a≤1 and 0.001≤b≤0.1; LiₐCoG_{b}O₂, wherein 0.90≤a≤1 and 0.001≤b≤0.1; LiₐMnG_{b}O₂, wherein 0.90≤a≤1 and 0.001≤b≤0.1, LiₐMn₂G_{b}O₄, wherein 0.90≤a≤1 and 0.001≤b≤0.1; QO₂; QS₂; LiQS₂; V₂O₅; LiV₂O₅; LiI'O₂; LiNiVO₄; Li_{(3-f)}J₂(PO₄)₃, wherein 0≤f≤2; Li_{(3-f)}Fe₂(PO₄)₃, wherein 0≤f≤2; and/or LiFePO₄.

In the formulas representing the above-described compounds, A may be Ni, Co, Mn, or any suitable combination thereof, B' may be Al, Ni, Co, Mn, Cr, Fe, Mg, Sr, V, a rare earth element, or any suitable combination thereof, D may be O, F, S, P, or any suitable combination thereof, E may be Co, Mn, or any suitable combination thereof, F' may be F, S, P, or any suitable combination thereof, G may be Al, Cr, Mn, Fe, Mg, La, Ce, Sr, V, or any suitable combination thereof, Q may be Ti, Mo, Mn, or any suitable combination thereof, I' may be Cr, V, Fe, Sc, Y, or any suitable combination thereof, and J may be V, Cr, Mn, Co, Ni, Cu, or any suitable combination thereof.

A compound in which a coating layer is added to a surface of the above compound may also be utilized, and a mixture of the above compound and a compound in which a coating layer is added may also be utilized. The coating layer added to the surface of the above compound may include, for example, a coating element compound of an oxide or a hydroxide of a coating element, an oxyhydroxide of a coating element, an oxycarbonate of a coating element, or a hydroxycarbonate of a coating element. A compound constituting the coating layer is amorphous or crystalline. The coating element included in the coating layer may include Mg, Al, Co, K, Na, Ca, Si, Ti, V, Sn, Ge, Ga, B, As, Zr, or any suitable mixture thereof.

A method of providing the coating layer may be selected within a range that does not adversely affect the physical properties of a cathode active material. A coating method may include, for example, spray coating, dipping, and/or the like. A specific coating method may be generally understood by those skilled in the art, and thus a detailed description thereof will not be provided.

According to one or more embodiments, the dry electrode 100 may be a dry anode. The dry anode may include a dry anode film as the dry electrode film 110, and the dry anode film may include a dry anode active material.

For example, as the dry anode active material, any material may be utilized as long as the material is utilized as an anode active material of a lithium battery in the art. For example, the dry anode active material may include at least one of (*e.g.,* at least one selected from among) a lithium metal, a metal alloyable with lithium, a transition metal oxide, a non-transition metal oxide, and/or a carbon-based material.

Examples of the metal alloyable with lithium may include Si, Sn, Al, Ge, Pb, Bi, Sb, a Si-Y alloy, wherein Y is an alkali metal, an alkali earth metal, a Group 13 element, a Group 14 element, a transition metal, a rare earth element, or any suitable combination thereof and is not Si, and/or a Sn-Y alloy, wherein Y is an alkali metal, an alkali earth metal, a Group 13 element, a Group 14 element, a transition metal, a rare earth element, or any suitable combination thereof and is not Sn. The element Y may include, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or any suitable combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or any suitable combination thereof). The transition metal oxide may be, for example, lithium titanium oxide, vanadium oxide, lithium vanadium oxide, and/or the like. The non-transition metal oxide may be, for example, SnO₂, SiOₓ, wherein 0<x≤2, and/or the like. The carbon-based material may be, for example, crystalline carbon, amorphous carbon, or any suitable mixture thereof. The crystalline carbon may be, for example, graphite such as non-shaped, plate-shaped, flake-shaped, spherical, or fibrous natural graphite or artificial graphite. The amorphous carbon may be, for example, soft carbon (low-temperature calcined carbon), hard carbon, mesophase pitch carbide, calcined coke, and/or the like.

### Lithium battery

According to one or more embodiments, a lithium battery may include a first electrode, a second electrode, and an electrolyte disposed between the first electrode and the second electrode, wherein the first electrode, the second electrode, or a combination thereof is the above-described dry electrode.

The lithium battery may include the dry electrode having reduced internal resistance and improved mechanical properties, and thus the cycle characteristics of the lithium battery may be improved.

The lithium battery may include, for example, a dry cathode, a dry anode, or a dry cathode and a dry anode. The lithium battery may include, for example, a dry cathode and a wet anode or may include a wet cathode and a dry anode.

The lithium battery may include the electrolyte, and the electrolyte may include, for example, a liquid electrolyte, a solid electrolyte, or any suitable combination thereof.

The liquid electrolyte may be, for example, an organic electrolyte. For example, a lithium salt may be dissolved in an organic solvent to prepare the organic electrolyte.

For example, as the organic solvent, any material may be utilized as long as the material may be utilized as an organic solvent in the art.

According to one or more embodiments, examples of the organic solvent may include propylene carbonate, ethylene carbonate (EC), fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or any suitable combination thereof.

For example, as the lithium salt, any material may be utilized as long as the material may be utilized as a lithium salt in the art. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each a natural number, LiCl, Lil, or any suitable combination thereof.

The solid electrolyte may include, for example, an inorganic solid electrolyte, an organic solid electrolyte, an organic-inorganic composite solid electrolyte, or any suitable combination thereof.

The solid electrolyte may include, for example, an oxide-based solid electrolyte, a sulfide-based solid electrolyte, a polymer-based solid electrolyte, or any suitable combination thereof.

The solid electrolyte may include, for example, boron oxide, lithium oxynitride, and/or the like, but the present disclosure is not limited thereto. Any material may be utilized as the solid electrolyte as long as the material may be utilized as a solid electrolyte in the art. The solid electrolyte may be stacked on the anode through, for example, sputtering, or a separate solid electrolyte sheet may be stacked on the anode.

Examples of the oxide-based solid electrolyte may include: Li_{1+x+y}AlₓTi₂₋ₓSi_{y}P_{3-y}O₁₂, wherein 0<x<2 and 0≤y<3, BaTiO₃, Pb(Zr,Ti)O₃ (PZT), Pb₁₋ₓLaₓZr_{1-y} Ti_{y}O₃(PLZT), wherein 0≤x<1 and 0≤y<1, Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti, Ge)₂₋ₓSi_{y}P_{3-y}O₁₂, wherein 0≤x≤1 and 0≤y≤1, LiₓLa_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, Li₃₊ₓLa₃M₂O₁₂, wherein M=Te, Nb, or Zr, and 0≤x≤10, Li₃₊ₓLa₃Zr_{2-y}M_{y}O₁₂ (M-doped LLZO), wherein M=Ga, W, Nb, Ta, Al, or any suitable combination thereof, 0≤x≤10, and 0<y<2, Li₇La₃Zr₂₋ₓTaₓO₁₂ (LLZ-Ta), wherein 0<x<2, or any suitable combination thereof. The oxide-based solid electrolyte may be, for example, a garnet-type or kind solid electrolyte. The oxide-based solid electrolyte may be prepared through sintering and/or the like.

Examples of the oxide-based solid electrolyte may include Li₇La₃Zr₂O₁₂ (LLZO), Li_{6.5}La₃Zr_{1.5}Ta_{0.5}O₁₂ Li_{1.3}Al_{0.3}Ti_{1.7}(PO₄)₃, Li_{0.34}La_{0.5},TiO_{2.94}, Li_{1.07}Al_{0.69}Ti_{1.46}(PO₄)₃, 50Li₄SiO₄-50Li₂BO₃, 90Li₃BO₃-10Li₂SO₄, Li_{2.9}PO_{3.3}N_{0.46}, or any suitable combination thereof.

The sulfide-based solid electrolyte may include, for example, at least one of (e.g., at least selected from among) Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are each a positive number and Z is one of Ge, Zn, and/or Ga, Li₂S-GeS₂, Li₂S-SiS₂-Li₃PO₄, Li₂S-SiS₂-LiₚMO_{q}, wherein p and q are each a positive number and M is one of P, Si, Ge, B, Al, Ga, and/or In, Li₇₋ₓPS₆₋ₓClₓ, wherein 0≤x≤2, Li₇₋ₓPS₆₋ₓBrₓ, wherein 0≤x≤2, and/or Li₇₋ₓPS₆₋ₓIₓ, wherein 0≤x≤2. For example, the sulfide-based solid electrolyte may be prepared by treating a starting material such as Li₂S or P₂S₅ through melt quenching or mechanical milling. For example, after such treating, heat treatment may be performed. The sulfide-based solid electrolyte may be in an amorphous state, a crystalline state, or any suitable mixture state thereof.

The sulfide-based solid electrolyte may include, for example, an argyrodite-type or kind solid electrolyte represented by Formula 9:

**Formula 9** **Li⁺₁₂₋ₙ₋ₓAⁿ⁺X²⁻₆₋ₓY⁻ₓ**

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2.

The sulfide-based solid electrolyte may be an argyrodite-type or kind compound including at least one of (*e.g.,* at least one selected from among) Li₇₋ₓPS₆₋ₓClₓ, wherein 0≤x≤2, Li₇₋ₓPS₆₋ₓBrₓ, wherein 0≤x≤2, and/or Li₇₋ₓPS₆₋ₓIₓ, wherein 0≤x≤2. For example, the sulfide-based solid electrolyte included in the solid electrode may be an argyrodite-type or kind compound including at least one of (*e.g.,* at least one selected from among) Li₆PS₅Cl, Li₆PS₅Br, and/or Li₆PS₅I.

The polymer-based solid electrolyte may be, for example, a solid electrolyte including an ion-conductive polymer and a lithium salt, a solid electrolyte including a polymeric ionic liquid (PIL) and a lithium salt, or any suitable combination thereof.

The ion-conductive polymer may be a polymer including an ion-conductive repeating unit in a main chain or a side chain. The ion-conductive repeating unit may be a unit having ion conductivity and may be, for example, an alkylene oxide unit or a hydrophilic unit. The ion-conductive polymer may include, for example, an ether-based monomer, an acrylic-based monomer, a methacrylic-based monomer, a siloxane-based monomer, or any suitable combination thereof as an ion-conductive repeating unit.

Examples of the ion-conductive polymer may include polyethylene oxide, polypropylene oxide, polymethyl methacrylate, polyethyl methacrylate, polydimethylsiloxane, polyacrylic acid, polymethacrylic acid, polymethyl acrylate, polyethyl acrylate, poly2-ethylhexyl acrylate, polybutyl methacrylate, poly2-ethylhexyl methacrylate, polydecyl acrylate, polyethylene vinyl acetate, or any suitable combination thereof. The ion-conductive polymer may include, for example, PEO, PVA, PVP, polyvinylsulfone, or any suitable combination thereof.

The PIL may include, for example, a repeating unit including i) one cation of (*e.g.,* one cation selected from among) an ammonium-based cation, a pyrrolidinium-based cation, a pyridinium-based cation, a pyrimidinium-based cation, an based-imidazolium cation, a piperidinium-based cation, a pyrazolium-based cation, an oxazolium-based cation, a pyridazinium-based cation, a phosphonium-based cation, a sulfonium-based cation, a triazolium-based cation, and/or any suitable mixture thereof, and ii) at least one anion of BF₄⁻, PF₆⁻, AsF₆⁻, SbF₆⁻, AlCl₄⁻, HSO₄⁻, ClO₄⁻, CH₃SO₃⁻, Cl⁻, Br⁻, I⁻, BF₄⁻, SO₄²⁻, PF₆⁻, ClO₄⁻, CF₃SO₃⁻, (C₂F₅SO₂)₂N⁻, (C₂F₅SO₂)(CF₃SO₂)N⁻, NO₃⁻, Al₂Cl₇⁻, CF₃COO⁻, CH₃COO⁻, (CF₃SO₂)₃C⁻, (CF₃CF₂SO₂)₂N⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, (O(CF₃)₂C₂(CF₃)₂O)₂PO⁻, and/or (CF₃SO₂)₂N⁻. The PIL may include, for example, poly(diallyldimethylammonium)bis(trifluoromethanesulfonyl)imide (TFSI), poly(1-allyl-3-methylimidazoliumbis(trifluoromethanesulfonyl)imide), poly((N-methyl-N-propylpiperidinium bis(trifluoromethanesulfonyl)imide, or any suitable combination thereof.

The lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein 1≤x≤20 and 1≤y≤20, LiCl, Lil, or any suitable combination thereof.

### Method of preparing dry electrode

A method of manufacturing a dry electrode 100 according to one or more embodiments may be provided. The method of preparing the dry electrode 100 may include providing a dry electrode film 110, and arranging the dry electrode film 110 on one surface or two surfaces of a metal substrate 120.

The providing of the dry electrode film 110 may include dry-mixing a dry electrode active material, a dry conductive material, and a dry binder to prepare a dry mixture, and molding the dry mixture to prepare the dry electrode film 110.

First, the dry electrode active material, the dry conductive material, and the dry binder may be dry-mixed to prepare the dry mixture. For example, the dry mixture in which the dry electrode active material, the dry conductive material, and the dry binder are dry-mixed may be prepared.

The dry-mixing refers to that mixing is performed in a state in which a process solvent is not included. A process solvent may be, for example, a solvent utilized in preparing an electrode slurry. The process solvent (which may be excluded from the dry mixing) may be, for example, water, N-methylpyrrolidone (NMP), and/or the like, but the present disclosure is not limited thereto. The material is not limited as long as the material is a process solvent utilized in preparing an electrode slurry. The dry-mixing may be performed at a rotational speed of about 10 rpm to about 10,000 rpm at a temperature of about 15 °C to about 65 °C by utilizing a stirrer. The dry-mixing may be performed for about 1 minute to about 200 minutes by utilizing the stirrer.

The dry-mixing may be performed, for example, once or more. First, the dry electrode active material, the dry conductive material, and the dry binder may be primarily dry-mixed to prepare a first dry mixture. The primary dry-mixing may be performed, for example, at a rotational speed of about 10 rpm to about 2,000 rpm at a temperature of about 25 °C to about 65 °C for 15 minutes or less. Subsequently, the first dry mixture may be additionally secondarily dry-mixed to prepare a second dry mixture. The secondary dry-mixing may be performed, for example, at a rotational speed of about 3,000 rpm to about 9,000 rpm at a temperature of about 25 °C to about 65 °C for about 10 minutes to about 60 minutes. A dry mixture including a fibrillized dry binder may be obtained through the secondary dry-mixing.

The stirrer may be, for example, a kneader. The stirrer may include, for example, a chamber, at least one rotating shaft disposed inside the chamber to rotate, and a blade rotatably coupled to the rotating shaft and disposed in a longitudinal direction of the rotating shaft. The blade may be, for example, at least one of (*e.g.,* at least one selected from among) a ribbon blade, a sigma blade, a Z blade, a dispersion blade, and/or a screw blade. By including the blade, without a solvent, the dry electrode active material, the dry conductive material, and the dry binder may be effectively mixed to prepare a dough-like mixture.

Examples of the dry binder may include a vinylidene fluoride/hexafluoropropylene copolymer, PVDF, polyacrylonitrile, polymethyl methacrylate, PTFE, a suitable mixture of the above polymers, an SBR-based polymer, and/or the like. The dry binder may be (*e.g.,* may be selected from among) dry binders utilized in the above-described dry electrode film 110.

Examples of the dry conductive material may include carbon black, graphite particles, natural graphite, artificial graphite, acetylene black, Ketjen black, a carbon fiber, CNTs, a metal powder, a metal fiber, a metal tube of copper, nickel, aluminium, or silver; and/or a conductive polymer such as a polyphenylene derivative, but the present disclosure is not limited thereto. Any material may be utilized as a conductive material as long as the material may be utilized as a conductive material in the art. The conductive material may be, for example, a carbon-based conductive material. The dry conductive material may be (*e.g.,* may be selected from among) dry conductive materials utilized in the above-described dry electrode film 110.

According to one or more embodiments, a plasticizer or a pore former may be further added to the dry mixture to form pores in an electrode plate.

Contents (*e.g.,* amounts) of the dry electrode active material, the dry binder, and the dry conductive material utilized in the dry electrode film 110 may be at levels generally utilized in a lithium battery.

In a dry cathode film, a dry cathode active material may be utilized as a dry cathode active material. The dry cathode active material may be as defined in the above-described dry electrode film 110.

In a dry anode film, a dry anode active material may be utilized as a dry anode active material. The dry anode active material may be as defined in the above-described dry electrode film 110.

Next, the dry mixture may be molded to prepare the dry electrode film 110.

The prepared dry mixture may be put into an extruder and extruded in the form of a sheet or film. A pressure during the extrusion may be, for example, in a range of about 4 MPa to about 100 MPa.

Next, a metal substrate 120, which includes a mesh area 121 including a plurality of through-areas A, may be provided. For example, a separate interlayer may not be disposed on one surface or two surfaces (*e.g.,* two opposite surfaces) of the metal substrate 120.

The metal substrate 120 may be defined as in the part of the above-described metal substrate 120. A substrate of a cathode current collector may be, for example, an aluminium foil. A substrate of an anode current collector may be, for example, an aluminium foil.

Next, the dry electrode films 110 may be concurrently (*e.g.,* simultaneously) disposed on the two surfaces (*e.g.,* the two opposite surfaces) of the metal substrate 120 to prepare the dry electrode 100. For example, the dry electrode 100 may be prepared by concurrently (*e.g.,* simultaneously) arranging a first dry electrode film 112 and a second dry electrode film 114 on the two surfaces (*e.g.,* the two opposite surfaces) of the metal substrate 120, respectively. For example, a separate layer (for example, an adhesive layer) may be absent between the metal substrate 120 and the dry electrode film 110.

For example, a rolling operation may be added while and/or after the dry electrode film 110 is disposed on the two surfaces (*e.g.,* the two opposite surfaces) of the metal substrate 120. For example, a rolling operation may be added while and/or after the first dry electrode film 112 and the second dry electrode film 114 are disposed on the two surfaces (*e.g.,* the two opposite surfaces) of the metal substrate 120, respectively.

According to one or more embodiments, a rolling operation may be performed while and/or after the first dry electrode film 112 and the second dry electrode film 114 are disposed on the mesh area 121 including the through-areas A, thereby electrically connecting the first dry electrode film 112 and the second dry electrode film 114 in the through-areas A. For example, a rolling operation may be performed while and/or after the first dry electrode film 112 and the second dry electrode film 114 are disposed on the mesh area 121 including the through-areas A, thereby electrically connecting the first dry electrode film 112 and the second dry electrode film 114 in the thickness direction (Z direction) within the through-areas A. In one or more embodiments, a separate layer (for example, an adhesive layer) may not be disposed on the first dry electrode film 112 and the second dry electrode film 114.

For example, as the rolling operation is performed, the dry electrode films 110 disposed on each of the two surfaces of the metal substrate 120 may be attached in the thickness direction within the through-areas A included in the mesh area 121 of the metal substrate 120. For example, as the rolling operation is performed, the first dry electrode film 112 and the second dry electrode film 114 respectively disposed on two surfaces of the metal substrate 120 may be inserted into the through-areas A included in the mesh area 121 of the metal substrate 120 so that the first dry electrode film 112 and the second dry electrode film 114 may be attached in the thickness direction within the through-areas A.

According to one or more embodiments, the rolling operation may be performed through roll pressing, flat pressing, and/or the like, but the present disclosure is not necessarily limited thereto. For example, a pressure during the rolling may be in a range of about 1.0 ton/cm to about 10.0 ton/cm. For example, a temperature during the rolling may be in a range of about 25 °C to about 200 °C.

### Method of manufacturing lithium battery

For example, a lithium battery may be manufactured through the following example method, but the present disclosure is not necessarily limited thereto. A method may vary according to required conditions.

First, one or both of a cathode and an anode may be prepared according to such a method of preparing a dry electrode. In one or more embodiments, if (*e.g.,* when) one electrode of the cathode and the anode is prepared through the above-described method of preparing a dry electrode, the other electrode may be prepared through a wet preparing method. For example, the other electrode may be prepared by preparing an electrode slurry including an electrode active material, a conductive material, a binder, and a solvent, coating an electrode current collector with the prepared electrode slurry, and drying the electrode current collector. A conductive material and a binder included in an electrode prepared in a wet type or kind may be (*e.g.,* may be selected from among) conductive materials and/or binders utilized in preparing the above-described dry electrode.

Next, a separator to be inserted between the cathode and the anode may be prepared.

As the separator, any separator may be utilized as long as the separator is generally available / generally utilized as a separator in a lithium battery. For example, a separator having low (relatively low) resistance to the movement of ions in an electrolyte and an excellent or suitable electrolyte impregnation ability may be utilized. For example, the separator may include at least one of *(*e.g., at least one selected from among) a glass fiber, polyester, Teflon, PE, PP, PTFE, and/or any suitable combination thereof and may be in the form of a nonwoven fabric or a woven fabric. For example, a windable separator including PE, PP, and/or the like may be utilized in a lithium ion battery, and a separator having an excellent or suitable electrolyte impregnation ability may be utilized in a lithium ion polymer battery.

The separator may be prepared through the following example method, but the present disclosure is not necessarily limited to such a method. A method may be adjusted according to required conditions.

First, a polymer resin, a filler, and a solvent may be mixed to prepare a separator composition. The separator composition may be applied directly onto an electrode and dried to form the separator. In one or more embodiments, the separator composition may be cast on a support, and then a separator film peeled off of the support may be laminated on an electrode to form the separator.

A polymer utilized for preparing the separator is not limited, and any material may be utilized as long as the material may be utilized in a binding material of an electrode plate. For example, the polymer may include a vinylidene fluoride/hexafluoropropylene copolymer, PVDF, polyacrylonitrile, polymethyl methacrylate, or a mixture thereof.

Next, an electrolyte may be prepared. The electrolyte may be defined as in the part of the above-described lithium battery.

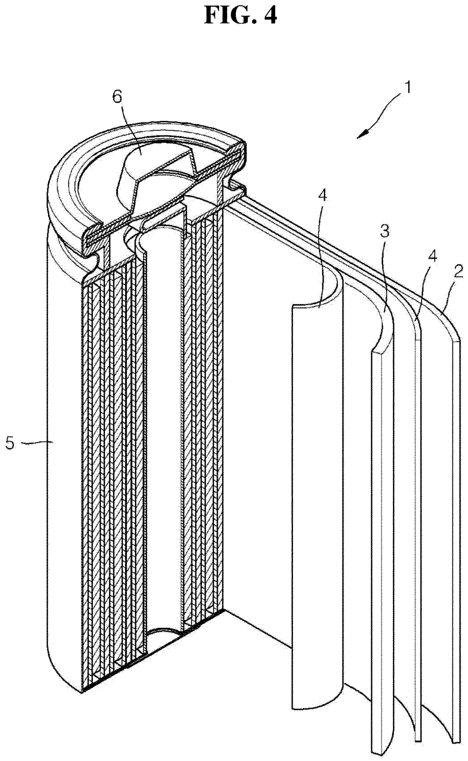

As shown in FIG. 4, a lithium battery 1 may include a cathode 3, an anode 2, and a separator 4. The cathode 3, the anode 2, and the separator 4 may be wound or folded to form a battery structure. The formed battery structure may be accommodated in a battery case 5. An organic electrolyte may be injected into the battery case 5, and the battery case 5 may be sealed with a cap assembly 6 to complete the lithium battery 1. The battery case 5 may have a cylindrical shape, but the present disclosure is not necessarily limited to such a shape. For example, the battery case 5 may have a prismatic shape, a thin film shape, and/or the like.

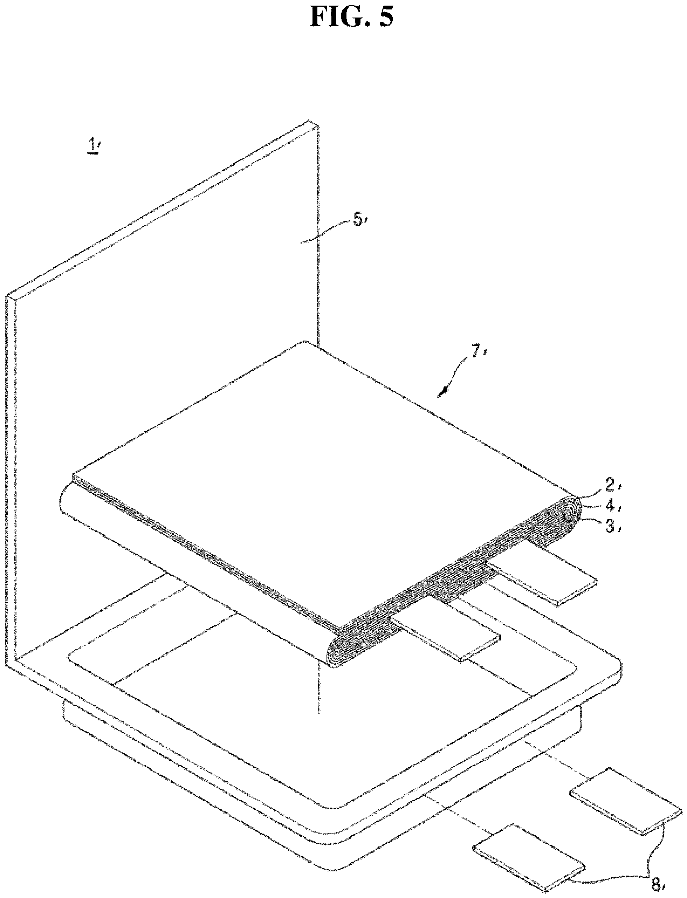

As shown in FIG. 5, a lithium battery 1' includes a cathode 3', an anode 2', and a separator 4'. The separator 4' may be disposed between the cathode 3' and the anode 2', and the cathode 3', the anode 2', and the separator 4' may be wound or folded to form a battery structure 7'. The formed battery structure 7' may be accommodated in a battery case 5'. The lithium battery 1' may include an electrode tab 8' serving as an electrical path for guiding a current generated in the battery structure 7' to the outside. An organic electrolyte may be injected into the battery case 5', and the battery case 5' may be sealed to complete the lithium battery 1'. The battery case 5' may have a prismatic shape, but the present disclosure is not necessarily limited to such a shape. For example, the battery case 5' may have a cylindrical shape, a thin film shape, and/or the like.

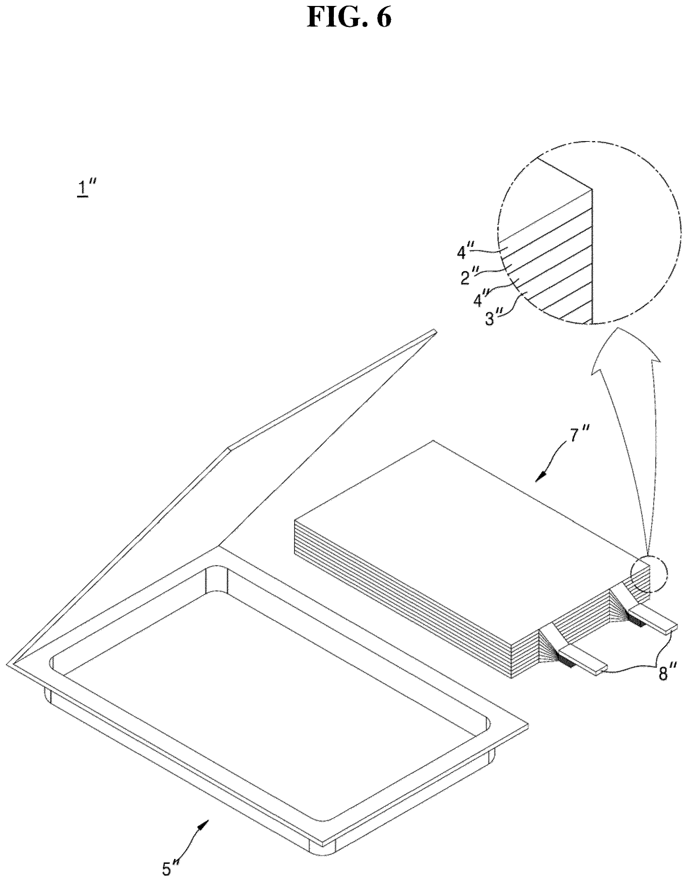

As shown in FIG. 6, a lithium battery 1" may include a cathode 3", an anode 2", and a separator 4". The separator 4" may be disposed between the cathode 3" and the anode 2" to form a battery structure 7". The battery structure 7" may be stacked in a bi-cell structure and then accommodated in a battery case 5". The lithium battery 1" may include an electrode tab 8" serving as an electrical path for guiding a current generated in the battery structure 7" to the outside. An organic electrolyte may be injected into the battery case 5", and the battery case 5" may be sealed to complete the lithium battery 1". The battery case 5" may have a prismatic shape, but the present disclosure is not necessarily limited to such a shape. For example, the battery case 5" may have a cylindrical shape, a thin film shape, and/or the like.

A pouch-type or kind lithium battery may correspond to a case in which a pouch is utilized as a battery case in each of the lithium batteries 1, 1' and 1" of FIGs. 4 to 6. The pouch-type or kind lithium battery may include one or more battery structures. A separator may be disposed between a cathode and an anode to form the battery structure. After the battery structure is stacked in a bi-cell structure, the battery structure may be impregnated with an organic electrolyte, accommodated in a pouch, and sealed to complete the pouch-type or kind lithium battery. For example, the above-described cathode, anode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

A lithium battery may have excellent or suitable lifespan characteristics and high-rate characteristics and thus may be utilized, for example, in electric vehicles (EVs). For example, the lithium battery may be utilized in hybrid vehicles such as plug-in hybrid electric vehicles (PHEVs). In one or more embodiments, the lithium battery may be utilized in fields in which large amounts of power are required to be stored. For example, the lithium battery may be utilized in electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptops, smartphones, electric vehicles, and/or the like. A battery module may include, for example, a plurality of batteries and a frame for holding the plurality of batteries. A battery pack may include, for example, a plurality of battery modules and a busbar for connecting the plurality of battery modules. The battery module and/or the battery pack may further include a cooling device. A plurality of battery packs may be adjusted by a battery management system. The battery management system may include a battery pack and a battery controller connected to the battery pack.

Hereinafter, the present disclosure will be described in more detail with reference to the following Examples and Comparative Examples. However, the following Examples are merely presented to exemplify the present disclosure, and the scope of the present disclosure is not limited thereto.

### Manufacturing of lithium battery (half-cell)

### Example 1: Through-surface ratio of 50 %

### Preparation of dry cathode film and dry cathode

LiNi_{0.91}Co_{0.05}Al_{0.04}O₂ (hereinafter referred to as NCA91) with an average particle diameter (D50) of 14 µm, a dry carbon conductive material, and PTFE as a dry binder were put into a blade mixer at a weight ratio of 96:2:2 and then primarily dry-mixed at a rotational speed of 1,200 rpm at a temperature of 25 °C for 10 minutes to prepare a first dry mixture in which a dry cathode active material, a dry conductive material, and a dry binder were uniformly mixed. As the dry carbon conductive material, a mixture of CNTs and Ketjen black (ECP) having a weight ratio of 7:3 was utilized.

Subsequently, in order for the dry binder to be fibrillized, by utilizing a blade mixer, the first dry mixture was additionally secondarily mixed at a rotational speed of 4,000 rpm at a temperature of 25 °C for 25 minutes to prepare a second dry mixture.

A separate solvent was not utilized during preparation of the first dry mixture and the second dry mixture.

The prepared second dry mixture was put into an extruder and extruded to prepare a dry cathode film (self-standing film) in the form of a sheet. A pressure during the extrusion was 60 MPa.

The prepared dry cathode film (self-standing film) was rolled to prepare a rolled dry electrode film (self-standing film). A pressure during the rolling was 3.5 ton/cm². A thickness of the dry cathode film was about 200 µm.

An aluminium thin film, which had a thickness of 25 µm and included a mesh area including a plurality of through-areas, was prepared. A ratio of the total area of the through-areas to the total area of the aluminium thin film was 50 %. The dry cathode film was disposed on each of two surfaces of the mesh area of the aluminium thin film and rolled at a temperature of 60 °C and a pressure of 3.5 ton/cm² to prepare a dry cathode.

### Manufacturing of coin cell

By utilizing the dry cathode prepared above, a lithium metal was utilized as a counter electrode, and a solution, in which a PTFE separator and 1.3 M LiPF₆ were dissolved in EC+ethyl methyl carbonate (EMC)+dimethyl carbonate (DMC) (volume ratio of 3:4:3), was utilized as an electrolyte to manufacture a coin cell.

### Example 2: Through-surface ratio of 40 %

A dry electrode film, a dry cathode, and a coin cell were manufactured in substantially the same manner as in Example 1, except that aluminium having a ratio of the total area of through-areas to the total area of an aluminium thin film was 40 % was utilized instead of the aluminium thin film in which the ratio of the total area of the through-areas to the total area of an aluminium thin film in Example 1 was 50 %.

### Comparative Example 1: Use of metal substrate including foam area

A dry anode film, a dry anode, and a coin cell were prepared in substantially the same manner as in Example 1, except that a metal substrate including a foam area without a through-area was utilized instead of a metal substrate including the mesh area utilized in Example 1.

### Evaluation Example 1: Evaluation of mixture resistance

The mixture resistance for each of the dry cathodes prepared in Example, Example 2, and Comparative Example 1 was measured by utilizing an electrode resistance meter (manufactured by Hioki).

Each of the dry cathodes prepared in Example 1, Example 2, and Comparative Example 1 was prepared (electrode plate punched at 36 pi), and a 100-µA current/0.2-V to 5.0-V voltage was applied to measure a potential at each distance through a probe and convert a measurement result into resistance, thereby measuring mixture/interface (electrode/substrate) resistance. The mixture resistance was calculated as an average value of data acquired by performing the measurement at least 5 times and then removing a minimum (min)/maximum (max). For each of the dry cathodes prepared in Example 1, Example 2, and Comparative Example 1, mixture resistance was measured. Measurement results are shown in Table 1.

### Evaluation Example 2: Evaluation of charge/discharge characteristics at room temperature (25 °C)

The lithium batteries manufactured in Example 1, Example 2, and Comparative Example 1 were charged at a constant current rate of 0.1 C at a temperature of 25 °C until a voltage reached 4.3 V (vs. Li), and then, in a constant voltage mode, while 4.3 V was maintained, the charging was cut off at a current rate of 0.05 C. Subsequently, the lithium batteries were discharged at a constant current rate of 0.1 C until the voltage reached 2.8 V (vs. Li) during discharging (formation cycle).

The lithium batteries subjected to the formation cycle were charged at a constant current rate of 0.5 C at a temperature of 25 °C until the voltage reached 4.3 V (vs. Li), and then, in a constant voltage mode, while 4.3 V was maintained, the charging was cut-off at a current rate of 0.05 C. Subsequently, the lithium batteries were discharged at a constant current rate of 0.5 C until the voltage reached 2.8 V (vs. Li) during discharging (1^{st} cycle). Such a cycle was repeated under the same conditions up to a 350^{th} cycle.

The lithium battery was rested for 10 minutes after every charging/discharging cycle. Some of charge/discharge test results at room temperature are shown in Table 1. A capacity retention ratio is defined by Equation 1. capacity retention ratio (%) = [discharge capacity at 350th cycle/discharge capacity at 1th cycle] × 100

**Table 1**

| | Mixture resistance [Ωcm] | Capacity retention ratio [%] |
|---|---|---|
| Example 1: through-area ratio of 50 % | 6.35 | 91.3 |
| Example 2: through-area ratio of 40 % | 6.89 | 91.0 |
| Comparative Example 1: metal substrate with foam structure | 8.11 | 90.3 |

As shown in Table 1, in the dry cathodes of Example 1 and Example 2 prepared by utilizing the metal substrate including the mesh structure that includes through-portions, the mixture resistance was reduced as compared with the dry electrode of Comparative Example 1 prepared by utilizing the metal substrate that included the foam structure rather than the mesh structure.

This was determined to be due to a decrease in internal resistance because electron movement was improved due to the dry electrode films disposed on two surfaces of the metal substrate being electrically connected through the through-portions.

As shown in Table 1, the lifespan characteristics of the lithium batteries of Example 1 and Example 2 were improved as compared with the lithium battery of Comparative Example 1.

According to aspects of embodiments of the present disclosure, the dry electrode may include the metal substrate including a plurality of through-areas so that electrolyte impregnation may be more easily performed.

According to aspects of embodiments of the present disclosure, a first dry electrode film and a second dry electrode film may be connected through the through-areas, and thus the lifespan and efficiency of a lithium battery including the dry electrode may be improved.

According to aspects of embodiments of the present disclosure, the dry electrode may not include (e.g., may exclude) an adhesive layer for attaching the first dry electrode film and the second dry electrode film to the metal substrate during a manufacturing process, thereby effectively preventing or reducing deterioration of cell performance due to nonuniform coating of the adhesive layer.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

Embodiments are set out in the following clauses:
Clause 1. A dry electrode comprising:
   a first dry electrode film;
   a second dry electrode film opposite to the first dry electrode film; and
   a metal substrate disposed between the first dry electrode film and the second dry electrode film,
   wherein the metal substrate comprises a mesh area comprising a plurality of through-areas (A).
Clause 2. The dry electrode of clause 1, wherein the first dry electrode film and the second dry electrode film are attached to each other in a thickness direction within at least some of the plurality of through-areas to form a through-portion (C).
Clause 3. The dry electrode of clause 2, wherein a mixture density of the through-portion (C) is in a range of about 2.8 g/cc to about 3.5 g/cc.
Clause 4. The dry electrode of any one of clauses 1 to 3, wherein the mesh area further comprises a lattice structure (B) formed by the through-areas (A).
Clause 5. The dry electrode of clause 4, wherein a mixture density of each of areas (D) disposed on the lattice structure (B) among the first dry electrode film and the second dry electrode film is in a range of about 3.2 g/cc to about 3.9 g/cc.
Clause 6. The dry electrode of any one of clauses 1 to 5, wherein the first dry electrode film and the second dry electrode film are in direct contact with each other in a thickness direction within at least some of the through-areas (A).
Clause 7. The dry electrode of any one of clauses 1 to 6, wherein an area between the first dry electrode film and the metal substrate or an area between the second dry electrode film and the metal substrate is free of an adhesive layer.
Clause 8. The dry electrode of any one of clauses 1 to 7, wherein a ratio of a total area of the plurality of through-areas A to a total area of the metal substrate is 40 % or more.
Clause 9. The dry electrode of any one of clauses 1 to 8, wherein a ratio of an area of any one through-area of the plurality of through-areas (A) to a total area of the metal substrate is in a range of about 0.1 % to about 50 %.
Clause 10. The dry electrode of any one of clauses 1 to 9, wherein the metal substrate further comprises a tab area extending in a longitudinal direction from the mesh area.
Clause 11. The dry electrode of clause 10, wherein the tab area is free of a through-area.
Clause 12. The dry electrode of clause 10 or clause 11, wherein the tab area comprises a first tab area and a second tab area, and
   the mesh area is disposed between the first tab area and the second tab area in the longitudinal direction.
Clause 13. The dry electrode of any one of clauses 10 to 12, wherein the mesh area is disposed between the first dry electrode film and the second dry electrode film, and
   at least a portion of the tab area is exposed to the outside of the first dry electrode film and the second dry electrode film.
Clause 14. A lithium battery comprising:
   a first electrode;
   a second electrode; and
   an electrolyte disposed between the first electrode and the second electrode,
   wherein the first electrode, the second electrode, or a combination thereof is the dry electrode of any one of clauses 1 to 13.
Clause 15. The lithium battery of clause 14, wherein the electrolyte comprises a liquid electrolyte, a solid electrolyte, or a combination thereof.

## Claims

1. A dry electrode comprising:
a first dry electrode film;
a second dry electrode film opposite to the first dry electrode film; and
a metal substrate between the first dry electrode film and the second dry electrode film,
wherein the metal substrate comprises a mesh area comprising a plurality of through-areas (A).

2. The dry electrode as claimed in claim 1, wherein the first dry electrode film and the second dry electrode film are attached to each other in a thickness direction within at least some of the plurality of through-areas to form a through-portion (C).

3. The dry electrode as claimed in claim 2, wherein a mixture density of the through-portion (C) is in a range of about 2.8 g/cc to about 3.5 g/cc.

4. The dry electrode as claimed in any one of claims 1 to 3, wherein the mesh area further comprises a lattice structure (B) formed by the through-areas (A).

5. The dry electrode as claimed in claim 4, wherein a mixture density of each of areas (D) on the lattice structure (B) among the first dry electrode film and the second dry electrode film is in a range of about 3.2 g/cc to about 3.9 g/cc.

6. The dry electrode as claimed in any one of claims 1 to 5, wherein the first dry electrode film and the second dry electrode film are in direct contact with each other in a thickness direction within at least some of the through-areas (A).

7. The dry electrode as claimed in any one of claims 1 to 6, wherein an area between the first dry electrode film and the metal substrate, and/or an area between the second dry electrode film and the metal substrate, is free of an adhesive layer.

8. The dry electrode as claimed in any one of claims 1 to 7, wherein a ratio of a total area of the plurality of through-areas (A) to a total area of the metal substrate is 40 % or more.

9. The dry electrode as claimed in any one of claims 1 to 8, wherein a ratio of an area of any one through-area of the plurality of through-areas (A) to a total area of the metal substrate is in a range of about 0.1 % to about 50 %.

10. The dry electrode as claimed in any one of claims 1 to 9, wherein the metal substrate further comprises a tab area extending in a longitudinal direction from the mesh area.

11. The dry electrode as claimed in claim 10, wherein the tab area is free of a through-area.

12. The dry electrode as claimed in claim 10 or claim 11, wherein the tab area comprises a first tab area and a second tab area, and
the mesh area is between the first tab area and the second tab area in the longitudinal direction.

13. The dry electrode as claimed in any one of claims 10 to 12, wherein the mesh area is between the first dry electrode film and the second dry electrode film, and
at least a portion of the tab area is exposed to the outside of the first dry electrode film and the second dry electrode film.

14. A lithium battery comprising:
a first electrode;
a second electrode; and
an electrolyte between the first electrode and the second electrode,
wherein the first electrode, the second electrode, or a combination thereof is the dry electrode as claimed in any one of claims 1 to 13.

15. The lithium battery as claimed in claim 14, wherein the electrolyte comprises a liquid electrolyte, a solid electrolyte, or a combination thereof.
